(19) Europäisches Patentamt
European Patent Office
Office européen des brevets

(11) **EP 3 613 715 B1**

(12) **EUROPEAN PATENT SPECIFICATION**

(45) Date of publication and mention
of the grant of the patent:
**07.07.2021 Bulletin 2021/27**

(51) Int Cl.:
**C04B 28/02** *(2006.01)*        **C04B 28/04** *(2006.01)*
**E04B 1/74** *(2006.01)*

(21) Application number: **18306128.2**

(22) Date of filing: **22.08.2018**

(54) **USE OF A MINERAL FOAM FOR THE PRODUCTION OF THERMALLY INSULATED PREFABRICATED WALLS**

VERWENDUNG EINES MINERALSCHAUMS ZUR HERSTELLUNG VON WÄRMEISOLIERTEN VORGEFERTIGTEN WÄNDEN

UTILISATION D'UNE MOUSSE MINÉRALE POUR LA PRODUCTION DE PAROIS PRÉFABRIQUÉES ISOLÉES THERMIQUEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.02.2020 Bulletin 2020/09**

(73) Proprietor: **Holcim Technology Ltd
6300 Zug (CH)**

(72) Inventors:
• **PEREZ, Nicolas
38291 SAINT QUENTIN FALLAVIER (FR)**
• **BLACHIER, Christian
38291 SAINT QUENTIN FALLAVIER (FR)**
• **FERREINT, Lilian
38291 SAINT QUENTIN FALLAVIER (FR)**
• **MOULIN, Adrien
38291 SAINT QUENTIN FALLAVIER (FR)**

(74) Representative: **Regimbeau
20, rue de Chazelles
75847 Paris Cedex 17 (FR)**

(56) References cited:
**EP-A1- 3 176 137     US-A1- 2009 308 001**

**Description**

**FIELD OF THE INVENTION**

The invention relates to the use of mineral foam for producing prefabricated layered walls, and more specifically the manufacturing process of prefabricated layered walls with high thermal insulating properties.
The prefabricated walls may be sandwich walls or double walls.

**BACKGROUND OF THE INVENTION**

Prefabricated thermally insulated sandwiched walls can use different kinds of insulating materials. In most cases, a low-density material such as polystyrene or mineral wool is used.
Polystyrene has very good thermal insulating properties, and high thermal resistivity can be achieved while using thin layers of insulating material. However, polystyrene is highly inflammable, which constitutes a dangerous hazard when used for insulating buildings.
To the contrary, mineral wool is not flammable, but it is solid. In order to produce thermally insulating sandwich walls, a layer of solid mineral wool needs to be deposited on a first concrete slab, before a second concrete slab is applied on the mineral wool. Depositing the layer of mineral wool is time consuming in a production plant, and several layers might be needed, therefore increasing the overall cost of the sandwiched wall.
The present invention aims at solving the above mentioned problems by using a mineral foam of high thermal resistivity for manufacturing prefabricated layered walls.
A single layer of mineral foam can be deposited on a slab of concrete as the layer of mineral foam is obtained by pouring a fresh mineral foam until the layer attains a desired thickness and leaving it to set. This use avoids the drawbacks of having several layers of an insulating material, notably problems of adhesion between the several layers and multiplication of operations.
Thus, the resulting sandwich wall is easier to produce and safer to use than thermally insulating sandwich walls that make use of other insulating materials such as a mineral wool or polystyrene.
Mineral foams, and in particular cement foams, are known and used for their excellent properties for thermal insulation, acoustic insulation, high durability, fire resistance and their easy implementation.
A mineral foam is a material in the form of foam. This material has a lower density than typical concrete due to the presence of a high-volume fraction of pores or empty spaces. These pores or empty spaces are due to the presence of air in the mineral foam and they may be in the form of bubbles. An ultra-light mineral foam is understood to be a mineral foam generally having a density in its dry state of between 20 and 200 kg/m$^3$.
A mineral foam is a material that is in general prepared by mixing a liquid cement slurry and an aqueous foam, preferably continuously. The mixing process of the two components is carried out before the initial setting time of the cement, and the mineral foam is said to remain in a fresh state until the cement starts to set. In its fresh state, the mineral foam can therefore be easily transported by, for example pumping, and placed in the construction element where it will later be used for one or several of its desirable properties.
In the prior art, mineral foam is used to fill empty or hollow spaces in a building, a wall, a partition wall, a brick, a floor or a ceiling. It can also be cast vertically between two walls, for example between two concrete walls. In this case, the two concrete walls have already been erected. Thus, mineral foam need to be produced on the building site and is used on pre-existing structures.
In WO 2015/150550, mineral foam is used to fill hollow parts of building blocks in particular concrete blocks.
However, mineral foam has not been used as insulating material to produce prefabricated sandwich walls.
Indeed, this application requires that the mineral foam remains in place during the manufacturing process of the sandwich wall. This implies:

- A good adhesion of mineral foam to concrete slabs used for production of prefabricated layered walls and
- Preventing the mineral foam from breaking or collapsing.

Indeed, mineral foam could break or collapse in several occasions during the process of manufacturing of the prefabricated layered wall, such as when the prefabricated layered wall is moved or when a concrete slab is deposited on the layer of mineral foam.
It was discovered that adhesion and bonding of the mineral foam onto the concrete slab is linked to water bleeding that occurs while the mineral foam is in its fresh state, i.e. before the cement sets. As in the case of concrete, prior to its setting and to the effect of gravity, a mineral foam based on a hydraulic binder will be subject to bleeding, i.e. to a fraction of free water that forms on outer surface of the volume of mineral foam.
Water bleeding is unfavorable to adhesion of the mineral foam onto the concrete slab. Poor adhesion is deleterious to the integrity of the resulting prefabricated wall, which then could not be moved or flipped, an essential prerequisite for a prefabricated wall.

In order to reach the required density and stability while reducing the formation of bleed water, a compromise has to be found between limiting the water bleeding but still obtaining a cement slurry that is fluid enough to be pumpable.

Patent document EP 3176137 A1 discloses a process for the production of a mineral foam comprising the following steps: (i) separately preparing a slurry of cement and an aqueous foam, wherein the cement slurry comprises water (W) and Portland cement (C) as well as CSH crystallization seeds; (ii) contacting the slurry of cement with the aqueous foam to obtain a slurry of foamed cement; (iii) casting the slurry of foamed cement and leave it to set.

## SUMMARY OF THE INVENTION

The present invention relates to the use of a mineral foam having a dry density ranging from 100 to 300 kg/m$^3$ obtained by contacting an aqueous foam with a cement slurry, said cement slurry comprising water W, a binder B and a water-reducing admixture, the binder B comprises Portland cement and less than 0.5 % of calcium aluminate cement, % expressed by mass relative to the mass of binder, wherein the weight water/binder (W/B) ratio of the cement slurry is reduced to a value below 0.44 but above 0.29 in order to improve adhesion of the mineral foam to a flat surface of a concrete slab (2) and allow the production of a prefabricated layered wall (1, 11, 12) comprising at least one connecting element (5, 51) and a layer (3) of said mineral foam in contact with at least one concrete slab (2) by putting in contact the mineral foam with a flat surface of said concrete slab (2), the at least one connecting element (5, 51) linking the layer (3) of mineral foam with said concrete slab (2).

In particular, the W/B ratio of the cement slurry used for producing the mineral foam is comprised between 0.31 and 0.44, preferably between 0.32 and 0.40.

Advantageously, the amount of water-reducing admixture is comprised between 0.05 and 0.5 wt.%, preferably between 0.05 and 0.25 wt.%, more preferably between 0.09 and 0.21 wt.%, percentage expressed as dry mass of admixture relative to the dry binder mass.

Preferably, the water-reducer is a polycarboxylate ether polymer.

Advantageously, the mineral foam comprises 0.05 to 2.5 wt.% of an accelerator, expressed as dry mass of accelerator relative to the dry binder mass, preferably the accelerator being aluminium sulphate.

In particular, the binder is a mixture of Portland Cement CEM I with ground slag or ground limestone, preferentially a CEM II A/LL or a CEM II A/L.

Preferably, the cement slurry does not comprise ultrafine mineral particles with a D50 less than or equal to 1.0 μm.

Advantageously, the mineral foam has a dry density that is ranging from 100 to 250 kg/m$^3$, more preferably ranging from 100 to 200 kg/m$^3$, even more preferably ranging from 150 to 180 kg/m$^3$.

In particular, the concrete of the concrete slab 2,4 is a fluid concrete with a consistency call of S3, S4 or S5 according the concrete standard NF EN 206-1 of November 2014, or a self-compacting concrete, more particularly, the concrete of the concrete slab 2,4 is a high performance concrete, preferably with a mechanical compressive strength above 60 MPa at 28 days, more particularly an ultra-high performance concrete, preferably with a mechanical compressive strength greater than 90 MPa after 28 days.

Advantageously, the invention relates to the use of the mineral foam as defined above for the production of a prefabricated layered wall 1, 11, 12 by:

1) obtaining the mineral foam as defined in any one of the preceding claims,
2) pouring the fresh mineral foam obtained in step 1) on a horizontal surface of a concrete slab 2 to obtain a prefabricated layered wall (1) comprising a concrete slab 2 with a layer of mineral foam 3 on an external surface of said concrete slab 2;
3) optionally providing a second concrete slab 4 above the layer of mineral foam 3 so that a sandwich or double wall 11, 12 is formed comprising of layer of mineral foam 3 in contact with at least one concrete slab 2 and in between two concrete slabs 2,4.

In particular, the mineral foam is cast on a flat surface of fresh or hardened concrete.

Preferably, the prefabricated layered wall contains an additional concrete slab 4 on or above the layer of mineral foam 3 and a layer of air, and the resulting prefabricated wall is a sandwich or a double wall 11, 12 comprising a layer of mineral foam 3 in contact with a layer of air between two concrete slabs 2, 4.

The invention also relates to a prefabricated layered wall 1, 11, 12 comprising at least one connecting element 5, 51, a concrete slab 2 with a layer of mineral foam 3 on an surface of said concrete slab 2 obtainable from the use of the mineral foam described above.

Finally, the invention relates to an element of construction comprising a prefabricated layered wall 1, 12, 13 as defined above.

**BRIEF DESCRIPTION OF THE FIGURES**

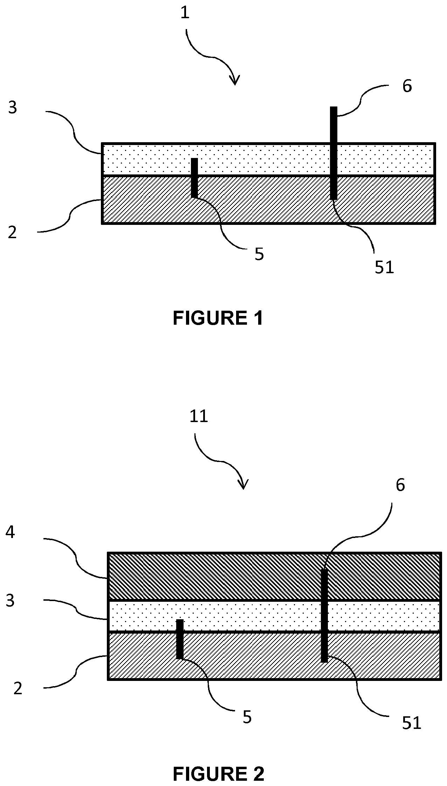

Figure 1-3 illustrate schematic diagrams of possible embodiments of a prefabricated layered wall obtained according to the process of the invention.

Figure A-B illustrate schematic diagrams of the additional step 3) of the process according to the invention.

**DETAILED DESCRIPTION OF EMBODIMENTS OF THE INVENTION**

**Use**

The present invention relates to the use of a mineral foam having a dry density ranging from 100 to 300 kg/m$^3$ obtained by contacting an aqueous foam with a cement slurry, said cement slurry comprising water W, a binder B and a water-reducing admixture, the binder B comprises Portland cement and less than 0.5 % of calcium aluminate cement (% expressed by mass relative to the mass of binder), wherein the weight water/binder (W/B) ratio of the cement slurry is reduced to a value below 0.44 but above 0.29 in order to improve adhesion of the mineral foam to a flat surface of a concrete slab 2 and allow the production of a prefabricated layered wall 1, 11, 12 comprising at least one connecting element 5, 51 and a layer 3 of said mineral foam in contact with at least one concrete slab 2 by putting in contact the mineral foam with a flat surface of said concrete slab 2, the at least one connecting element 5, 51 linking the layer 3 of mineral foam with said concrete slab 2.

**Mineral foam**

The expression "mineral foam" designates a complex medium mixture comprising a hydraulic binder, in particular cement, mixed with gas bubbles, generally air.
Advantageously, the fresh mineral foam in the present invention is prepared according to the following general process:

> a) separately preparing a slurry of cement and an aqueous foam, wherein the cement slurry comprises water (W), a binder (B), a water reducing admixture, and optionally another admixture;
> b) contacting the slurry of cement with the aqueous foam to obtain a fresh mineral foam.

The binder B starts reacting with water W as soon the components are mixed together, which correspond to the so-called hydration reactions. These hydration reactions will result in the formation of mineral hydrates that then grow until the cement actually sets. The setting time corresponds to the time when the mineral foam loses its plastic and elastic properties and becomes a hard and brittle material. Once the cement is set, the mineral foam is in its harden state. Even after setting has occurred, hydration reactions continue, resulting in a gradual development of mechanical strength of the mineral foam. Over a longer period of time, water that has not been consumed by the hydration reactions will evaporate. Once all this water has evaporated, the mineral foam is in its dry state.
Preferably, the mineral foam used in the present invention has a dry density that is ranging from 100 to 250 kg/m$^3$, more preferentially from 100 to 200 kg/m$^3$, even more preferentially between 120 and 180 kg/m$^3$, in particular between 150 and 180 kg/m$^3$. This range of densities is of particular interest for the present invention as it was found to be a good compromise between density, therefore thermal resistivity, and strength. To achieve this desired density, the weight ratio between the cement slurry and the aqueous foam is adjusted accordingly.
The dry mineral cement foam preferably has thermal conductivity ranging from 0.033 to 0.080 W/m.K, preferably from 0.040 to 0.065 W/m.K and more preferably from 0.050 to 0.060 W/m.K.
Thermal conductivity (also known as lambda (Λ)) is a physical magnitude characterizing the behavior of materials at the time of heat transfer via conduction. Thermal conductivity represents the amount of heat transferred per unit surface area and per unit of time under a temperature gradient. In the international unit system, thermal conductivity is expressed in watts per metre Kelvin ($W \cdot m^{-1} \cdot K^{-1}$).

**Cement slurry**

The cement slurry is typically a mixture of binder, water, and includes one or several chemical admixtures to adjust its rheological properties and to accelerate or retard the setting time of the cement.
The binder is a hydraulic binder comprising at least 50 wt.% of CaO and of SiO$_2$. The binder may therefore contain other components in addition to CaO and $SiO_2$, in particular slag, silica fume, pozzolans (natural and calcined), fly ash (siliceous and calcic) and/or limestone.

Preferably, the binder used in the present invention is a Portland cement. It may be any type of Portland cement, whatever its chemical composition is, and in particular whatever its alkaline content is. Advantageously, the Portland cement used in the invention is selected from the cements readily available on the market.

A Portland cement is a cement that contains Portland clinker. The Portland cement may also comprise other mineral components, as described in the European standard NF EN 197-1 of April 2012., Preferably the Portland cement is of the types CEM I, CEM II, CEM III, CEM IV or CEM V, more preferably cement of the types CEM I, CEM II with slag, silica fume, pozzolan, fly ash limestone or calcinated schist, CEM III, CEM IV or CEM V. CEM I, CEM II, CEM II, CEM IV and CEM V cements are readily available on the market.

Even more preferentially, the binder used in the present invention is a CEM I or a CEM II.

According to a preferred embodiment of the invention, the binder has a specific surface (Blaine) of 3000 - 9000 $cm^2$/g, preferably 3500 - 6000 $cm^2$/g.

The binder may also be a mixture of any Portland cement as described in the European standard NF EN 197-1 Standard of April 2012 with other mineral components. Preferably, the binder used to produce the mineral foam used in the invention may comprise 0 to 50 wt.% of mineral components, more preferably from 0 to 40 wt.%, most preferably from 0 to 30 wt.%, the percentages being expressed by mass relative to the mass of binder.

The mineral components used according to the invention may be slags (for example, as defined in the European NF EN 197-1 Standard of April 2012, paragraph 5.2.2), pozzolanic materials (for example as defined in the European NF EN 197-1 Standard of April 2012, paragraph 5.2.3), fly ash (for example, as described in the European NF EN 197-1 Standard of April 2012, paragraph 5.2.4), calcined schists (for example, as described in the European NF EN 197-1 Standard of April 2012, paragraph 5.2.5), material containing calcium carbonate, for example limestone (for example, as defined in the European NF EN 197-1 Standard paragraph 5.2.6), silica fume (for example, as defined in the European NF EN 197-1 Standard of April 2012, paragraph 5.2.7), siliceous additions (for example, as defined in the "Concrete" NF P 18-509 Standard), metakaolin or mixtures thereof.

The mineral components are composed of mineral particles that have a D50 generally comprised between 1 $\mu$m and 20 $\mu$m.

In particular, the mineral components added to the Portland cement in the cement slurry comprise less than 1 wt.% of ultrafine mineral particles with a D50 less than or equal to 1 $\mu$m, more particularly less than 0.5 wt.%, the percentages being expressed by mass relative to the mass of binder.

Preferably, the mineral components added to the Portland cement in the cement slurry does not comprise ultrafine mineral particles with a D50 less than or equal to 1 $\mu$m.

The D50, also noted as Dv50, corresponds to the $50^{th}$ percentile of the size distribution of the particles, by volume; that is, 50% of the particles have a size that is less than or equal to D50 and 50% of the particles have a size that is greater than D50.

In a specific embodiment, the binder is a mixture of CEM I with ground slag or ground limestone, preferentially a CEM II A/LL or a CEM II A/L.

The binder used according to the invention comprises less than 0.5% of calcium aluminate cements and their mixtures, % expressed by mass relative to the mass of binder. Calcium aluminate cements are cements generally comprising a mineral phase C4A3$, CA, C12A7, C3A or C11A7CaF2 or their mixtures, such as, e.g., Ciment Fondu® (a calcium aluminate-based hydraulic binder), alumina cements, sulfoaluminate cements and calcium aluminate cements according to the European NF EN 14647 Standard of December 2006. Such cements are characterized by an alumina ($Al_2O_3$) content of $\geq$ 35 wt.%.

Accordingly, the binder of the invention comprises less than 35 wt.%, expressed in mass in relation to the cement mass, of alumina ($Al_2O_3$).

The water/binder ratio (wt./wt. ratio) of the cement slurry of the present invention is ranging from 0.29 to 0.44, preferably from 0.31 to 0.44, more preferably from 0.32 to 0.40. The water/binder ratio may vary, for example due to the water demand of the mineral particles when these are used. The water/binder ratio is defined as being the ratio by mass of the quantity of total water (W) to the dry binder mass (B). The total water comprises the water added to the binder and the water potentially added coming from the admixtures. If the W/B ratio is less than 0.29, it is difficult to produce a stable mineral foam of the desired density.

The cement slurry of the present invention comprises a water reducer, advantageously chosen from a plasticizer, a superplasticizer and mixture thereof. A water reducer makes it possible to reduce the amount by weight of mixing water for a given workability by typically 10-15%. By way of example of water reducers, mention may be made of lignosulphonates, hydroxycarboxylic acids, carbohydrates, and other specific organic compounds, for example glycerol, polyvinyl alcohol, sodium alumino-methyl-siliconate, sulfanilic acid and casein as described in the Concrete Admixtures Handbook, Properties Science and Technology, V.S. Ramachandran, Noyes Publications, 1984.

Superplasticizers belong to a new class of water reducers and are capable of reducing water contents of mixing water, for a given workability, by approximately 30% by mass. By way of example of a superplasticizer, the PCP superplasticizers without an anti-foaming agent may be noted. The term "PCP" or "polyoxy polycarboxylate" is to be understood according to the present invention as a copolymer of acrylic acids or methacrylic acids and their esters of polyoxyethylene (POE). The superplasticizer can be a polycarboxylate ether polymer (PCE).

Preferably, the cement slurry comprises 0.05 to 0.25 wt.%, more preferably 0.07 to 0.23 wt.% and more preferably 0.09 to 0.21 wt.% of a water-reducer, advantageously chosen from a plasticizer, a superplasticizer and mixture thereof, percentage expressed as dry mass of water reducer relative to the dry binder mass.

Preferably, the cement slurry does not comprise an anti-foaming agent, or any agent having the property of destabilizing air bubbles. Certain commercial super-plasticizers may contain anti-foaming agents and consequently these super-plasticizers are not suitable for the preparation of cement slurry used to produce the mineral foam according to the invention.

**Aqueous foam**

According to the invention, the aqueous foam is prepared in two steps:

i) preparing an aqueous solution comprising a foaming agent, then
ii) preparing an aqueous foam from the aqueous solution of foaming agent obtained in step i) by introduction of a gas.

The aqueous foam may thus be produced by combining water and a foaming agent, then introducing a gas.

Preferably, the foaming agent is an organic protein derivative of animal origin (such as, e.g., the foaming agent named Propump26, a liquid solution of hydrolyzed keratin, sold by the company Propump Engineering Ltd) or of vegetable origin. The foaming agents may also be a cationic surfactant (for example cetyltrimethylammonium bromide, CTAB), an ionic surfactant, an amphoteric surfactant (for example cocamidopropyl betaine, CAPB), or a nonionic surfactant, or mixtures thereof.

The foaming agent may be in powder form or a liquid.

The foaming agent is preferably used in an amount ranging from 0.25 to 10.00 wt.%, preferably from 0.25 to 7.50 wt.%, preferably from 0.25 to 5.00 wt.%, preferably from 0.35 to 2.00 wt.%, expressed in dry mass of foaming agent compared to the mass of water in the aqueous foam.

Any of the following commercial products comprising a foaming agent can be used:

- Propump 26 obtained from the company Propump Engineering Ltd having a dry extract of 26 +/- 2 wt.%;
- MAPEAIR LA/L obtained for the company MAPEI, having a dry extract of 28 +/- 2 wt.%;
- Foamcem LT2 supplied by the company Laston Italiana spa, having a dry extract of 28 +/- 2 wt.%;
- PENTAMIX AER 907 supplied by Pentachem, having a dry extract of 30 +/- 2 wt.%;
- mixtures thereof.

The commercial products comprising a foaming agent are advantageously first diluted in tap water in order to reach a dosage ranging from 0.25 to 10.00 wt.%, preferably from 0.25 to 7.50 wt.-%, preferably from 0.25 to 5.00 wt.-%, preferably from 0.50 to 2.00 wt.-%, expressed in dry mass of foaming agent compared to the mass of water in the aqueous foam.

The gas introduced is preferably air.

The introduction of gas, preferably of air, may be carried out by stirring, by bubbling or by injection under pressure. Preferably, the aqueous foam may be produced using a turbulent foamer (bed of glass beads for example). This type of foamer makes it possible to introduce air under pressure into an aqueous solution comprising a foaming agent.

The aqueous foam can be produced continuously or in batches.

The density of aqueous foam is typically between 10 and 100 kg/m$^3$.

In an embodiment, before the aqueous foam is actually produced, an aqueous solution of a foaming agent is prepared, the aqueous solution of foaming agent being at a dosage comprised between 10 and 100 g/L, corresponding to between 0.25 and 2.50 wt.% (dry mass) of foaming agent compared to the total mass of water. This aqueous solution is then pumped at a rate of 0.02 to 30 L/min into a foam generator which is constituted of a tube that is filled by smaller elements such glass beads, fibres, or small metallic or plastic components into which the air and aqueous solution are fed. Together with this flow of aqueous solution, air is injected into the foam generator at a pressure of 1 to 7 bars at a T-junction. Depending on the desired scale of production, this process can produce from 1 to 500 L/min of aqueous foam.

In a preferred embodiment, the aqueous foam is prepared using a foam generator into which a mixture of a foaming agent and water is added. In the examples provided below, the aqueous foam has a density of 45 kg/m$^3$ is prepared by diluting a foaming agent in water at 25 g/L.

The person skilled in the art would easily adjust the flow of air and solution of foaming agent to reach a desired density of aqueous foam, typically between 10 and 100 kg/m³. The theoretical fresh density (id est the target) can be calculated from the flow of the cement slurry and of the aqueous foam using the following equation:

$$d_{MF} = \frac{d_S + M_{AF} \times \frac{d_S}{M_S}}{\frac{M_{AF}}{d_{AF}} \times \frac{d_S}{M_S} + 1} \qquad (1)$$

wherein:

- $M_{AF}$ is the mass of aqueous foam
- $M_S$ is the mass of cement slurry
- $d_S$ is the density of the cement slurry
- $d_{MF}$ is the density of the fresh mineral foam
- $d_{AF}$ is the density of the aqueous foam

Equation (1) is directly derived from the general relation:

$$M_{AF} = M_S \times \frac{d_S - d_{MF}}{d_S} \times \frac{d_{AF}}{d_{MF} - d_{AF}} \qquad (2)$$

wherein $M_{AF}$, $M_S$, $d_S$, $d_{MF}$ and $d_{AF}$ are as defined for equation (1).

In preferred embodiments, the mineral foam has a fresh density corresponding to the theoretical one. In such a case, the mineral foam has thus improved stability properties since the foam was not destabilized during mixing of the cement slurry and the aqueous foam.

The term "corresponding to" means that the measured fresh density differs from the theoretical fresh density (the target) by less than 7%, preferably less than 5%.

As an example, the table below provides the flows and densities of the cement slurry and aqueous foam to reach the desired fresh densities of the mineral foam of the present invention.

| Air flow rate (L/min) | Aqueous solution of foaming agent flow rate (kg/min) | Density of resulting aqueous foam (kg/m³) | Cement slurry flow rate (kg/min) | Density of resulting dry mineral foam (kg/m³) |
|---|---|---|---|---|
| 8 | 0.37 | 45 | 1.34 | 150 |
| 8 | 0.37 | 45 | 1.63 | 180 |

**Other additives**

According to an embodiment of the invention, other additives may be added to the cement slurry or the aqueous foam. Such additives may be thickening agents, viscosifying agents, air entraining agents, setting retarders, setting accelerators, coloured pigments, hollow glass beads, film forming agents, hydrophobic agents or de-polluting agents (for example zeolites or titanium dioxide), latex, organic or mineral fibres, mineral additions or their mixtures. Preferably, the additives do not comprise any defoaming agents.

The expression "thickening agent", is generally to be understood as any compound making it possible to maintain the heterogeneous physical phases in equilibrium or facilitate this equilibrium. The suitable thickening agents are preferably gums, cellulose or its derivatives, for example cellulose ethers or carboxy methyl cellulose, starch or its derivatives, gelatine, agar, carrageenans or bentonite clays.

Preferably, the mineral foam according to the invention comprises 0.05 to 2.5 wt.% of an accelerator, expressed as dry mass of accelerator relative to the dry binder mass. The accelerator might be a calcium salt, potassium salt or sodium salt such as nitrate, nitrite, chloride, formiate, thiocyanate, sulfate, bromide, carbonate or mixture thereof. It can be an alkali metal silicate or an alkali metal aluminium such as sodium silicate, potassium silicate, sodium aluminate, potassium aluminate or mixture thereof. It can also be an aluminium salt such as aluminium sulfate, aluminium nitrate, aluminium chloride, aluminium hydroxide or mixture thereof. Preferably, the accelerator is aluminium sulphate. The accelerator may specifically reduce the setting times, increase strength development, or provide both features.

In particular, when the accelerator is calcium chloride, it can be introduced in the cement slurry.

Alternatively, the accelerator is introduced during step b) when contacting cement slurry and aqueous foam.

**Concrete slab 2, 4**

A concrete slab is a flat piece of concrete.

The term « flat » means that the height or depth or thickness of the piece is negligible in relation to its width and length.

The following can apply to the first or the second concrete slab 2, 4 used in the process of the invention, or to both.

In particular, the thickness/length ratio of the hardened concrete slab is ranging from 0.0025 to 0.2, more particularly from 0.075 to 0.16.

Preferably, the hardened concrete slabs 2, 4 are in the shape of a rectangular parallelepiped. In particular the length of the concrete slab is comprised between 1 and 10 m, preferably between 2 and 8, the width of the concrete slab is comprised between 1 and 4 m, preferably between 2 and 3, and the height (or thickness) of the concrete slab between 0.02 and 0.20 m, preferably between 0.06 and 0.16 m.

In particular, the concrete of the concrete slabs 2 and 4 are standard concretes used in precast applications, i.e. concretes that are generally fluid (i.e. with a consistency class of S3, S4 or S5 according the concrete standard NF EN 206-1 of November 2014) and have relatively high strength values, typically above 35 MPa at 28 days. Self-compacting concretes may also be used. High and ultra-high performance concretes, preferably with a mechanical strength greater than 90 MPa after 28 days, may also be suitable for this invention. However, in the case of high and ultra-high performance concrete, the thickness of the concretes slabs 2 and 4 may be reduced.

Ultra-high performance concretes are for example described in patent applications WO 2015/193419, WO 2015/193420 and WO 2015/193444.

Advantageously, the concrete slabs 2, 4 are reinforced, for example with metal frames and reinforcing elements. The concrete slabs 2, 4 may further comprise fibers, for example mineral fibers, organic fibers, metal fibers or a mixture thereof.

Advantageously, connecting elements 5, 51 can protrude from the concrete slabs 2, 4. They can either protrude from the first or the second concrete slab, or both.

The connecting elements will then be on the surface that is or will be facing the layer of mineral foam.

In particular, connecting elements 5, 51 are fiberglass, stainless steel, or plastic composite elements. More preferentially, fiberglass is used to ensure better thermal insulation properties. More particularly, they are protruding perpendicularly to the external surface of the concrete slab 2, 4.

They can help maintaining the mineral foam layer 3. They can provide mechanical support to help maintain the layer of mineral foam 3 in place between the two slabs of concrete 2, 4. They can also allow connecting the two slabs of concrete 2, 4 so that the distance between the two slabs is higher than the thickness of the mineral foam layer 3 and a layer of air is obtained between the second concrete slab 4 and the mineral foam 3. Then, the layer of air will allow casting fresh concrete on a given jobsite. The thickness of the layer of air is typically adjusted by adapting the length of the connecting elements 5, 51.

The concrete slab may be prepared by pouring concrete into a mould, optionally with connecting elements that are inserted into the fresh concrete, notably so that the connecting elements are protruding.

**Process**

According to the use of the invention, the adhesion of the mineral foam disclosed above to a concrete slab can be improved and allows production of prefabricated layered wall 1, 11, 12.

Accordingly, disclosed herein is a process for production of a prefabricated layered wall 1, 11, 12 which comprises the following steps:

1) obtaining the mineral foam as defined above;

2) pouring the fresh mineral foam obtained in step 1) on an horizontal surface of a concrete slab 2 to obtain a prefabricated layered wall 1 comprising a concrete slab 2 with a layer of mineral foam 3 in contact with a surface of said concrete slab 2;

3) optionally providing a second concrete slab 4 above the layer of mineral foam 3 so that a sandwich or double wall 11, 12 is formed comprising of layer of mineral foam 3 in contact with a surface of at least one concrete slab 2 and in between two concrete slabs 2,4.

Adding a layer of mineral foam on a concrete slab does not correspond to filling a block of concrete with mineral foam. In the first case, the mineral foam is in contact with one flat external surface of the concrete slab. In the second case a hole is filled and the mineral foam is in contact with several internal surfaces of the concrete block or with one internal concave surface.

The concrete slab 2 in step 2) can be in the fresh state or in the hardened state.

A fresh concrete is a concrete entirely mixed and still in a state making it possible to compact it according to any given method as stated in standard NF EN 206-1 of November 2014.

A hardened concrete is a concrete having acquired a substantial resistance as stated in standard NF EN 206-1, corresponding approximately to the time required for the binder to set.

Preferably, the concrete slab 2 in step 2) is in its fresh state. Alternatively, the concrete slab 2 in step 2) is in its hardened state.

The layer of mineral foam 3 is obtained by pouring a fresh mineral foam on the surface of the concrete slab 2.

It is important that the mineral foam is cast prior its setting onto the concrete slab 2 in order to obtain sufficient bonding at the resulting interface. The concrete slab 2 may still be in a fresh state when the mineral foam is cast.

Before step 3), the layer of mineral foam can be in its fresh state or in its hardened state. A mineral foam is its fresh state from the time it is prepared until the binder sets, the fresh mineral foam is plastic and elastic, and is therefore able to flow to some extent.

Once the binder has set, the mineral foam is hard.

A mineral foam is in its dry state when all excess water remaining after the hydration reactions have mostly occurred has evaporated, and its weight is stable. Depending on the environment, a mineral foam can typically take weeks before it is dry.

Preferably, before step 3) the layer of mineral foam 3 is in its fresh state. Alternatively, before step 3) the layer of mineral foam 3 is in its hardened state.

In particular, the layer of mineral foam 3 on the surface of the concrete slab 2 obtained at step 2) has a thickness comprised between 3 and 40 cm, more preferably between 8 and 35 cm, even more preferably between 10 and 30 cm.

The concrete slab 2 comprises at least one connecting element 5 protruding from the surface of the concrete slab 2 onto which the fresh mineral foam is poured in step 2) (see figure 1).

In particular, the connecting elements are made out of fiberglass, stainless steel, or plastic composite elements. More preferentially, fiberglass is used to ensure better thermal insulation properties. More preferentially, the connecting elements are protruding perpendicularly to the surface of the concrete slab 2.

In particular, in step 2) the prefabricated layered wall 1 comprises a concrete slab 2 with a layer of mineral foam 3 on a surface of said concrete slab 2 and at least one connecting element 5, 51 in contact with the concrete slab 2 and the layer of mineral foam 3.

In particular, the connecting element 51 is protruding from the layer of mineral foam 3. The connecting element 51 protruding from the layer of mineral foam 3 comprises thus a protruding part 6 that is not in contact with the layer of mineral foam 3 nor with the first concrete slab 2. The connecting element 51 can thus bind with a second concrete slab 4.

Secondary connecting elements, such as a rosace, may also be used in combination with the connecting elements 5 in order to maintain the layer of mineral foam 3 in place.

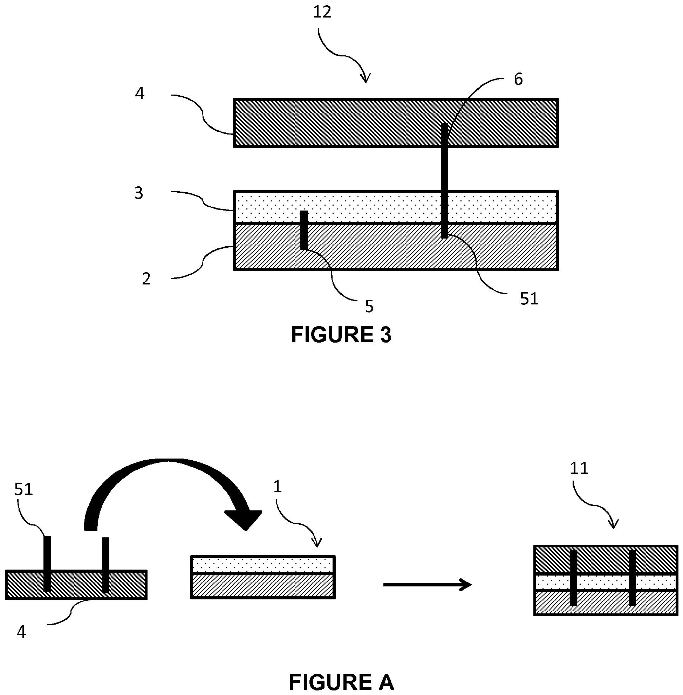

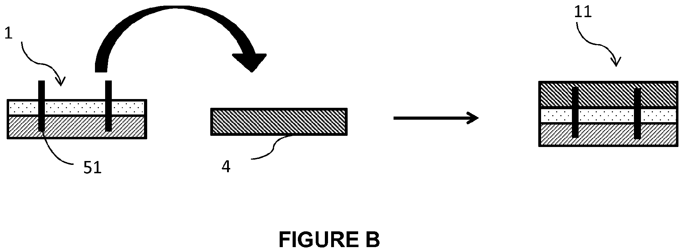

Prefabricated sandwich walls 11 and 12, depicted in figures 2 and 3, illustrate sandwich or double walls obtained after step 3).

The sandwich or double wall 11, 12 formed comprising of layer of mineral foam 3 in contact with a surface of at least one concrete slab 2 and in between two concrete slabs 2,4.

It also comprise at least one connecting element 51 in contact with the first slab 2, the layer of mineral foam 3 and the second concrete slab 4.

The prefabricated layered wall 11 may be obtained directly by pouring fresh concrete onto the layer of mineral foam of the prefabricated layered wall 1.

The volume of poured concrete and the length of the protruding part 6 are adjusted to the final design of the prefabricated wall 11.

Alternatively, the second slab 4 is poured and hardened before step 3), and it is then positioned over the layer of mineral foam 3 of the prefabricated layered wall 1 (see figure A)

The volume of poured concrete and the length of the protruding part 6 are adjusted to the final design of the prefabricated wall 11 or 12.

Alternatively, the prefabricated layered wall 1 is lifted, flipped over, and positioned over the fresh concrete slab 4 so that the layer of mineral foam faces the second concrete slab. The flipped prefabricated wall 1 is then lowered so that the protruding parts 6 may penetrate the fresh concrete slab 4 to the desired depth. In this case, it is important that the mineral foam 3 and the concrete slab 2 have set and are hard enough for the prefabricated layered wall 1 to be lifted and flipped over. The prefabricated layered wall 11 obtained is then a double wall. (see figure B)

One skilled in the art can adapt the protruding part 6 of the connecting element and the thickness of the concrete slab 4 so as to obtain the prefabricated sandwich wall 11, in which the layer of mineral foam is in contact with the second concrete slab 4, or to obtain the prefabricated sandwich wall 12, which contains a gap between the mineral foam 3 and the second concrete slab 4.

## PREFABRICATED LAYERED WALLS 1, 11, 12

The present invention also relates to prefabricated layered walls 1 comprising at least one connecting element 5, 51, a concrete slab 2 with a layer of mineral foam 3 in contact with a surface of said concrete slab 2 obtainable from the use of the mineral foam according to the invention or according to the process according to the invention.

Preferably, the layer of mineral foam 3 has a thickness comprised between 3 and 40 cm, more preferably between 8 and 35 cm, even more preferably between 10 and 30 cm. Preferably, the concrete slab 2 has a thickness comprised between 1 and 25 cm, more preferably between 2 and 20 cm, even more preferably between 6 and 16 cm.

The prefabricated layered wall 1 comprises connecting elements 5, 51 that link the concrete slab 2 with the mineral foam 3.

The present invention also relates to a sandwich wall 11, 12 comprising a layer of mineral foam 3 in contact with a surface of at least one concrete slab 2 and in between a first and a second concrete slabs 2, 4 obtainable from the use of the mineral foam according to the invention or according to the process according to the invention. Particularly, sandwich wall 11, 12 are disclosed previously in references to figures 1, 2 and 3 in the process part or are the resulting product the process disclosed previously.

Preferably, the layer of mineral foam 3 has a thickness comprised between 3 and 40 cm, more preferably between 8 and 35 cm, even more preferably between 10 and 30 cm.

The two concrete slabs 2, 4 can be identical or different.

Preferably, one or both concrete slab 2, 4 has a thickness comprised between 1 and 25 cm, more preferably between 2 and 20 cm, even more preferably between 6 and 16 cm.

The sandwich walls 11 and 12 can comprise at least one connecting element 5, 51 that link the layer of mineral foam 3 with one or two concrete slabs 2, 4.

Connecting elements 5, 51 can be in contact with the first concrete slab 2, the mineral foam 3 and the second concrete slab 4.

The sandwich walls 11 and 12 can comprise a layer of air between the layer of mineral foam 3 and the second concrete slab 4.

The prefabricated layered wall 1 and the sandwich wall 11 and 12 can be used as an element of construction of larger structures such as houses, warehouses, buildings, etc.

They can be transported and handled easily to the building site. Building is fast using them and the resulting construction is well insulated.

Thus, the present invention also relates to an element of construction comprising a prefabricated layered wall 1, 11, 12 as defined above.

## EXAMPLES

### Materials

In all the following examples:

- For slurries 1 and 2, the binder used is CEM II A/S 42.5 R produced at the Lafarge Mannersdorf plant in Austria
- For slurry 3, the binder used, named hereinafter "premix CEM I", is a mixture of 90 wt.-% of CEM I 52,5 R CE CP2 NF produced at the plant of Le Teil, France and 10 wt.-% of Mikhart 1.
- The plasticizer is Mapei Dynamon NRG 1022 in slurries 1 and 2 and Mapei Bind'R (mix between Dynamon NRG 1022 and a delayed superplasticizer) in slurry 3.
- The foaming agent used is MAPEAIR LA/L, diluted at a concentration of 25 g/L in the aqueous solution of foaming agent. The dry extract of MAPEAIR LA/L is 28 wt.%.

Mikhart 1 is a limestone filler supplied by La Provençale.

In all examples, tap water is used.

In examples 1 and 2 and comparative example 1, the fresh precast concrete onto which the mineral foam is poured is the same and with a consistency call of S3 according the concrete standard NF EN 206-1 of November 2014.

**Equipment**

Cement mixer:

- A Turbotest mixer (MEXP-101, model: Turbotest 33/300, Serial N°: 123861) supplied by the company Rayneri, which is a mixer having a vertical axis.

Pumps:

- A pump having an eccentric screw conveyer SeepexTM of the type MD 006-24, commission no. 244920.
- A peristaltic pump Realax, model ISI 10
- A peristaltic pump Watson Marlow, model 323E.

Foamer:

- A foamer comprising a bed of glass beads of the type SB30 having a diameter of 2
- 2.5 mm filled up in a tube having a length of 500 mm and a diameter of 25 mm.

Static mixer:

- A static mixer comprised of 48 helicoidal elements of the type Kenics having a diameter of 19 mm.

**Production process of mineral foams**

The mineral foams of all the following examples were produced according to the following process:

1. Water W and the plasticizer are introduced in the mixing tank.
2. The cement slurry is prepared by adding the binder B gradually to the tank while mixing.
3. An aqueous solution of foaming agent is prepared at a dosage of 25 g/L of foaming agent (corresponding to a dry extract of the aqueous solution of 0.7 wt.%).
4. An aqueous foam is prepared by injecting air into the solution of foaming agent, in a foam generator. The air flow is of 8 L/min, and the flow of foaming agent solution is of 0.37 L/min to obtain an aqueous foam with density of 45 kg/m$^3$
5. The fresh mineral foam is finally produced by mixing the cement slurry and the aqueous foam in a weight ratio of 4.45 to obtain mineral foam with a fresh density of 230 kg/m$^3$. The flow rates of cement slurry and aqueous foam are adjusted to reach a target density, as calculated with equation (1).

**Comparative example 1**

| Slurry 1 - Recipe for 1 m$^3$ of mineral foam | | |
|---|---|---|
| Total water | 62.77 | kg |
| Dynamon NRG 1022 | 0.41 | L |
| CEM II A/S 42.5 R Mannersdorf | 139.50 | kg |
| | | |
| Dynamon NRG 1022 | 0.39 | kg |

(continued)

| Slurry 1 - Recipe for 1 m³ of mineral foam | | |
|---|---|---|
| Slurry volume | 108.9 | L |
| W/B | 0.45 | |
| % dry Dynamon NRG 1022 / Binder | 0.09 | |

A mineral foam was produced with slurry 1, with a target fresh density of 245kg/m³. In the laboratory, samples were produced by pouring the fresh foam onto a fresh precast concrete surface, and some bleed water appeared after the fresh mineral was placed. The mineral foam obtained from slurry 1 did not bond sufficiently well with the concrete surface below. The foam could therefore detach from the concrete surfaces, and the resulting prefabricated wall could not be moved. This foam is not suitable for the production of sandwich or double walls.

**Example 1 according to the invention**

| Slurry 2 - Recipe for 1 m³ of mineral foam | | |
|---|---|---|
| Total water | 44.40 | kg |
| Dynamon NRG 1022 | 0.90 | L |
| CEM II A/S 42.5 R Mannersdorf | 138.70 | kg |
| | | |
| Dynamon NRG 1022 | 0.86 | kg |
| Slurry volume | 90.70 | L |
| W/B | 0.32 | |
| % dry Dynamon NRG 1022 / Binder | 0.21 | |

These slurries were produced with a cement CEM II A/S 42.5 R produced at the Lafarge Mannersdorf plant in Austria.
A mineral foam was produced with slurry 2, with a target fresh density of 230 kg/m³. In the laboratory, samples were produced by pouring the fresh mineral foam onto a fresh precast concrete surface, and no bleed water appeared after the fresh mineral was placed. The mineral foam obtained from slurry 2 did bond sufficiently with the concrete surface below so that the resulting prefabricated wall could be moved. In particular, the concrete surface could be flipped over so that the mineral foam would be facing the ground without breaking and collapsing. Therefore this foam is suitable for the production of sandwich or double walls.

**Example 2 according to the invention**

| Slurry 3 - Recipe for 1 m³ of mineral foam | | |
|---|---|---|
| Total water | 44.01 | kg |
| Bind'R | 0.73 | L |
| Premix CEM I | 137.50 | kg |
| | | |
| Bind'R | 0.67 | kg |
| Slurry volume | 89.0 | L |
| W/B | 0.32 | |

(continued)

| Slurry 3 - Recipe for 1 m³ of mineral foam | |
| --- | --- |
| % dry Bind'R / Binder | 0.15 |

A mineral foam was produced with slurry 3, with a target fresh density of 226 kg/m3. In the laboratory, samples were produced by pouring the fresh mineral foam onto a fresh precast concrete surface, and no bleed water appeared at all after the fresh mineral was placed. The mineral foam obtained from slurry 3 did bond well with the concrete surface below. In particular, the concrete surface could be flipped over so that the mineral foam would be facing the ground without breaking and collapsing. Therefore this foam is also suitable for the production of sandwich or double walls.

## Claims

1. Use of a mineral foam having a dry density ranging from 100 to 300 kg/m$^3$ obtained by contacting an aqueous foam with a cement slurry, said cement slurry comprising water W, a binder B and a water-reducing admixture, the binder B comprises Portland cement and less than 0.5 % of calcium aluminate cement, % expressed by mass relative to the mass of binder, wherein the weight water/binder (W/B) ratio of the cement slurry is reduced to a value below 0.44 but above 0.29 in order to improve adhesion of the mineral foam to a flat surface of a concrete slab (2) and allow the production of a prefabricated layered wall (1, 11, 12) comprising at least one connecting element (5, 51) and a layer (3) of said mineral foam in contact with at least one concrete slab (2) by putting in contact the mineral foam with a flat surface of said concrete slab (2), the at least one connecting element (5, 51) linking the layer (3) of mineral foam with said concrete slab (2).

2. Use of the mineral foam according to claim 1, wherein the W/B ratio of the cement slurry used for producing the mineral foam is comprised between 0.31 and 0.44, preferably between 0.32 and 0.40.

3. Use of the mineral foam according to any of the preceding claims, wherein the amount of water-reducing admixture is comprised between 0.05 and 0.5 wt.%, percentage expressed as dry mass of admixture relative to the dry binder mass.

4. Use of the mineral foam according to any one of the preceding claims, wherein the amount of water-reducing admixture is comprised between 0.05 and 0.25 wt.%, preferably between 0.09 and 0.21 wt.%, percentage expressed as dry mass of admixture relative to the dry binder mass.

5. Use of the mineral foam according to any one of the preceding claims, wherein the water-reducer is a polycarboxylate ether polymer.

6. Use of the mineral foam according to any one of the preceding claims, wherein the mineral foam comprises 0.05 to 2.5 wt.% of an accelerator, expressed as dry mass of accelerator relative to the dry binder mass, preferably the accelerator being aluminium sulphate.

7. Use of the mineral foam according to any one of the preceding claims, wherein the binder is a mixture of Portland Cement CEM I with ground slag or ground limestone, preferentially a CEM II A/LL or a CEM II A/L.

8. Use of the mineral foam according to any one of the preceding claims, wherein the cement slurry does not comprise ultrafine mineral particles with a D50 less than or equal to 1.0 $\mu$m.

9. Use of the mineral foam according to any one of the preceding claims, wherein the mineral foam has a dry density that is ranging from 100 to 250 kg/m$^3$, more preferably ranging from 100 to 200 kg/m$^3$, even more preferably ranging from 150 to 180 kg/m$^3$.

10. Use of the mineral foam according to any one of the preceding claims, wherein the concrete of the concrete slab (2,4) is a fluid concrete with a consistency call of S3, S4 or S5 according the concrete standard NF EN 206-1 of November 2014, or a self-compacting concrete.

11. Use of the mineral foam according to any one of the preceding claims, wherein the concrete of the concrete slab

(2,4) is a high performance concrete, preferably with a mechanical compressive strength above 60 MPa at 28 days, more particularly an ultra-high performance concrete, preferably with a mechanical compressive strength greater than 90 MPa after 28 days.

12. Use of the mineral foam according to any of the preceding claims for the production of a prefabricated layered wall (1, 11, 12) by:

1) obtaining the mineral foam as defined in any one of the preceding claims,
2) pouring the fresh mineral foam obtained in step 1) on a horizontal surface of a concrete slab (2) to obtain a prefabricated layered wall (1) comprising a concrete slab (2) with a layer of mineral foam (3) on an external surface of said concrete slab (2);
3) optionally providing a second concrete slab (4) above the layer of mineral foam (3) so that a sandwich or double wall (11, 12) is formed comprising of layer of mineral foam (3) in contact with at least one concrete slab (2) and in between two concrete slabs (2,4).

13. Use of the mineral foam according to claim 12, wherein the mineral foam is cast on a flat surface of fresh or hardened concrete.

14. Use of the mineral foam according to any one of claims 12 and 13, wherein the prefabricated layered wall contains an additional concrete slab (4) on or above the layer of mineral foam (3) and a layer of air, and wherein the resulting prefabricated wall is a sandwich or a double wall (11, 12) comprising a layer of mineral foam (3) in contact with a layer of air between two concrete slabs (2, 4).

15. A prefabricated layered wall (1, 11, 12) comprising at least one connecting element (5, 51), a concrete slab (2) with a layer of mineral foam (3) on a surface of said concrete slab (2) obtainable from the use of the mineral foam described in claims 12 to 13, the at least one connecting element (5, 51) linking the layer (3) of mineral foam with said concrete slab (2).

16. An element of construction comprising a prefabricated layered wall (1, 12, 13) as defined in claim 15.


**Patentansprüche**

1. Verwendung eines Mineralschaums mit einer Trockendichte in einem Bereich von 100 bis 300 kg/m$^3$, der durch Kontaktieren eines wässerigen Schaums mit einem Zementschlamm erhalten wird, wobei der genannte Zementschlamm Wasser W, ein Bindemittel B und ein Wasser-Reduktionsmittel umfasst, wobei das Bindemittel B PortlandZement und weniger als 0,5 % Kalziumaluminat-Zement, in Masse % relativ zur Masse des Bindemittels ausgedrückt, umfasst, wobei das Gewichtsverhältnis Wasser/Bindemittel (W/B) des Zementschlamms auf einen Wert unterhalb von 0,44 aber oberhalb von 0,29 gemindert ist, um die Anhaftung des Mineralschaums an einer flachen Oberfläche einer Betonplatte (2) zu verbessern und die Herstellung einer vorgefertigten geschichteten Wand (1, 11, 12) zu ermöglichen, umfassend wenigstens ein Verbindungselement (5, 51) und eine Schicht (3) des genannten Mineralschaums, der mit wenigstens einer Betonplatte (2) in Kontakt ist, indem der Mineralschaum mit einer flachen Oberfläche der genannten Betonplatte (2) in Kontakt gebracht wird, wobei das wenigstens eine Verbindungselement (5, 51) die Schicht (3) des Mineralschaums mit der genannten Betonplatte (2) verbindet.

2. Verwendung des Mineralschaums gemäß Anspruch 1, wobei das W/B-Verhältnis des Zementschlamms, der zum Herstellen des Mineralschaums verwendet wird, zwischen 0,31 und 0,44, bevorzugt zwischen 0,32 und 0,40 inbegriffen ist.

3. Verwendung des Mineralschaums gemäß irgendeinem der voranstehenden Ansprüche, wobei die Menge des Wasser-Reduktionsmittels zwischen 0,05 und 0,5 Gew.-% inbegriffen ist, wobei der Prozentsatz als Trockenmasse des Wasser-Reduktionsmittels relativ zur trockenen Bindermasse ausgedrückt ist.

4. Verwendung des Mineralschaums gemäß irgendeinem der voranstehenden Ansprüche, wobei die Menge des Wasser-Reduktionsmittels zwischen 0,05 und 0,25 Gew.-%, bevorzugt zwischen 0,09 und 0,21 Gew.-% inbegriffen ist, wobei der Prozentsatz als Trockenmasse des Wasser-Reduktionsmittels relativ zur trockenen Bindermasse ausgedrückt ist.

**5.** Verwendung des Mineralschaums gemäß irgendeinem der voranstehenden Ansprüche, wobei das Wasser-Reduktionsmittel ein Polycarboxylat-Ätherpolymer ist.

**6.** Verwendung des Mineralschaums gemäß irgendeinem der voranstehenden Ansprüche, wobei der Mineralschaum 0,05 bis 2,5 Gew.-% eines Härtungsbeschleunigers umfasst, ausgedrückt als Trockenmasse des Härtungsbeschleunigers relativ zur trockenen Bindermasse, wobei der Härtungsbeschleuniger bevorzugt Aluminiumsulfat ist.

**7.** Verwendung des Mineralschaums gemäß irgendeinem der voranstehenden Ansprüche, wobei das Bindemittel eine Mischung aus Portlandzement CEM I mit Schlackenmehl oder gemahlenem Kalkstein, bevorzugt einem CEM II A/LL oder einem CEM II A/L ist.

**8.** Verwendung des Mineralschaums gemäß irgendeinem der voranstehenden Ansprüche, wobei der Zementschlamm keine ultrafeinen Mineralpartikel mit einem D50 von weniger als oder gleich 1,0 $\mu$m umfasst.

**9.** Verwendung des Mineralschaums gemäß irgendeinem der voranstehenden Ansprüche, wobei der Mineralschaum eine Trockendichte aufweist, die von 100 bis 250 kg/m$^3$, bevorzugt von 100 bis 200 kg/m$^3$, weiter bevorzugt von 150 bis 180 kg/m$^3$ reicht.

**10.** Verwendung des Mineralschaums gemäß irgendeinem der voranstehenden Ansprüche, wobei der Beton der Betonplatte (2, 4) ein flüssiger Beton mit einer Festigkeit von S3, S4 oder S5 gemäß der Betonnorm NF EN 206-1 aus November 2014 oder ein selbstverdichtender Beton ist.

**11.** Verwendung des Mineralschaums gemäß irgendeinem der voranstehenden Ansprüche, wobei der Beton der Betonplatte (2, 4) ein Hochleistungsbeton, bevorzugt mit einer mechanischen Druckfestigkeit oberhalb von 60 MPa nach 28 Tagen, insbesondere ein Ultra-Hochleistungsbeton, bevorzugt mit einer mechanischen Druckfestigkeit von mehr als 90 MPa nach 28 Tagen ist.

**12.** Verwendung des Mineralschaums gemäß irgendeinem der voranstehenden Ansprüche zur Herstellung einer vorgefertigten geschichteten Wand (1, 11, 12) durch:

1) Erhalten des Mineralschaums gemäß Definition in irgendeinem der voranstehenden Ansprüche,
2) Ausgießen des in Schritt 1) erhaltenen frischen Mineralschaums auf einer horizontalen Fläche einer Betonplatte (2) zum Erhalten einer vorgefertigten geschichteten Wand (1), umfassend eine Betonplatte (2) mit einer Schicht aus Mineralschaum (3) auf einer externen Oberfläche der genannten Betonplatte (2);
3) optionales Bereitstellen einer zweiten Betonplatte (4) oberhalb der Schicht aus Mineralschaum (3) derart, dass eine Sandwich- oder Doppelwand (11,12) gebildet wird, umfassend eine Schicht aus Mineralschaum (3), die mit wenigstens mit einer Betonplatte (2) in Kontakt und zwischen zwei Betonplatten (2, 4) ist.

**13.** Verwendung des Mineralschaums gemäß Anspruch 12, wobei der Mineralschaum auf einer flachen Oberfläche von frischem oder gehärtetem Beton gegossen wird.

**14.** Verwendung des Mineralschaums gemäß irgendeinem der Ansprüche 12 und 13, wobei die vorgefertigte geschichtete Wand eine zusätzliche Betonplatte (4) auf oder oberhalb der Schicht aus Mineralschaum (3) und einer Schicht aus Luft enthält und wobei die resultierende vorgefertigte Wand eine Sandwich- oder eine Doppelwand (11, 12) ist, umfassend eine Schicht aus Mineralschaum (3), die mit einer Schicht aus Luft zwischen zwei Betonplatten (2, 4) in Kontakt ist.

**15.** Vorgefertigte geschichtete Wand (1, 11, 12), umfassend wenigstens ein Verbindungselement (5, 51), eine Betonplatte (2) mit einer Schicht aus Mineralschaum (3) auf einer Oberfläche der genannten Betonplatte (2), die aus der Verwendung des in den Ansprüchen 12 bis 13 beschriebenen Mineralschaums erhaltbar ist, wobei das wenigstens eine Verbindungselement (5, 51) die Schicht (3) aus Mineralschaum mit der genannten Betonplatte (2) verbindet.

**16.** Bauelement, umfassend eine vorgefertigte geschichtete Wand (1, 12, 13) gemäß Definition in Anspruch 15.

**Revendications**

**1.** Utilisation d'une mousse minérale présentant une densité sèche allant de 100 à 300 kg/m$^3$ obtenue en mettant en contact une mousse aqueuse avec un coulis de ciment, ledit coulis de ciment comprenant de l'eau E, un liant L et un adjuvant réducteur d'eau, le liant L comprenant du ciment Portland et moins de 0,5 % de ciment d'aluminates de calcium, pourcentage exprimé en masse par rapport à la masse du liant, dans laquelle le rapport en poids eau/liant (E/L) du coulis de ciment est réduit à une valeur inférieure à 0,44 mais supérieure à 0,29 afin d'améliorer l'adhésion de la mousse minérale à une surface plane d'une dalle de béton (2) et de permettre la production d'une paroi stratifiée préfabriquée (1, 11, 12) comprenant au moins un élément de connexion (5, 51) et une couche (3) de ladite mousse minérale en contact avec au moins une dalle de béton (2) en mettant en contact la mousse minérale avec une surface plane de ladite dalle de béton (2), le au moins un élément de connexion (5, 51) liant la couche (3) de mousse minérale à ladite dalle de béton (2).

2. Utilisation de la mousse minérale selon la revendication 1, dans laquelle le rapport E/L du coulis de ciment utilisé pour produire la mousse minérale est compris entre 0,31 et 0,44, de préférence entre 0,32 et 0,40.

3. Utilisation de la mousse minérale selon l'une quelconque des revendications précédentes, dans laquelle la quantité d'adjuvant réducteur d'eau est comprise entre 0,05 et 0,5 % en poids, pourcentage exprimé en tant que masse sèche de l'adjuvant par rapport à la masse sèche du liant.

4. Utilisation de la mousse minérale selon l'une quelconque des revendications précédentes, dans laquelle la quantité d'adjuvant réducteur d'eau est comprise entre 0,05 et 0,25 % en poids, de préférence entre 0,09 et 0,21 % en poids, pourcentage exprimé en tant que masse sèche de l'adjuvant par rapport à la masse sèche du liant.

5. Utilisation de la mousse minérale selon l'une quelconque des revendications précédentes, dans laquelle le réducteur d'eau est un polymère de type polycarboxylate éther.

6. Utilisation de la mousse minérale selon l'une quelconque des revendications précédentes, dans laquelle la mousse minérale comprend 0,05 à 2,5 % en poids d'un accélérateur, exprimé en tant que masse sèche de l'accélérateur par rapport à la masse sèche du liant, l'accélérateur étant de préférence du sulfate d'aluminium.

7. Utilisation de la mousse minérale selon l'une quelconque des revendications précédentes, dans laquelle le liant est un mélange de ciment Portland CEM I avec du laitier broyé ou du calcaire broyé, de préférence un ciment CEM II/A/LL ou un ciment CEM II A/L.

8. Utilisation de la mousse minérale selon l'une quelconque des revendications précédentes, dans laquelle le coulis de ciment ne comprend pas de particules minérales ultrafines ayant une valeur D50 inférieure ou égale à 1,0 $\mu$m.

9. Utilisation de la mousse minérale selon l'une quelconque des revendications précédentes, dans laquelle la mousse minérale présente une densité sèche allant de 100 à 250 kg/m$^3$, de manière davantage préférée allant de 100 à 200 kg/m$^3$, de manière encore davantage préférée allant de 150 à 180 kg/m$^3$.

10. Utilisation de la mousse minérale selon l'une quelconque des revendications précédentes, dans laquelle le béton de la dalle de béton (2, 4) est un béton fluide avec une consistance classée S3, S4 ou S5 selon la norme béton NF EN 206-1 de novembre 2014, ou un béton autoplaçant.

11. Utilisation de la mousse minérale selon l'une quelconque des revendications précédentes, dans laquelle le béton de la dalle de béton (2, 4) est un béton haute performance, de préférence avec une résistance mécanique à la compression supérieure à 60 MPa à 28 jours, plus particulièrement un béton ultra haute performance, de préférence avec une résistance mécanique à la compression supérieure à 90 MPa après 28 jours.

12. Utilisation de la mousse minérale selon l'une quelconque des revendications précédentes destinée à la production d'une paroi stratifiée préfabriquée (1, 11, 12) en :

   1) obtenant la mousse minérale telle que définie dans l'une quelconque des revendications précédentes,
   2) versant la mousse minérale fraîche obtenue à l'étape 1) sur une surface horizontale d'une dalle de béton (2) afin d'obtenir une paroi stratifiée préfabriquée (1) comprenant une dalle de béton (2) avec une couche de mousse minérale (3) sur une surface externe de ladite dalle de béton (2) ;
   3) fournissant facultativement une seconde dalle de béton (4) au-dessus de la couche de mousse minérale (3) de manière à ce qu'un panneau sandwich ou une double paroi (11, 12) soit formé(e) comprenant la couche de mousse minérale (3) en contact avec au moins une dalle de béton (2) et entre deux dalles de béton (2, 4).

**13.** Utilisation de la mousse minérale selon la revendication 12, dans laquelle la mousse minérale est coulée sur une surface plane de béton frais ou durci.

**14.** Utilisation de la mousse minérale selon l'une quelconque des revendications 12 et 13, dans laquelle la paroi stratifiée préfabriquée contient une dalle de béton supplémentaire (4) sur ou au-dessus de la couche de mousse minérale (3) et une couche d'air, et dans laquelle la paroi préfabriquée obtenue est un panneau sandwich ou une double paroi (11, 12) comprenant une couche de mousse minérale (3) en contact avec une couche d'air entre deux dalles de béton (2, 4).

**15.** Paroi stratifiée préfabriquée (1, 11, 12) comprenant au moins un élément de connexion (5, 51), une dalle de béton (2) avec une couche de mousse minérale (3) sur une surface de ladite dalle de béton (2) pouvant être obtenue en utilisant la mousse minérale décrite dans les revendications 12 et 13, la au moins un élément de connexion (5, 51) liant la couche (3) de mousse minérale à ladite dalle de béton (2).

**16.** Élément de construction comprenant une paroi stratifiée préfabriquée (1, 12, 13) telle que définie dans la revendication 15.

**FIGURE 1**

**FIGURE 2**

12

4

6

3

2

5

51

**FIGURE 3**

51

1

4

11

**FIGURE A**

**FIGURE B**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015150550 A
- EP 3176137 A1
- WO 2015193419 A
- WO 2015193420 A
- WO 2015193444 A

### Non-patent literature cited in the description

- Properties Science and Technology. **V.S. RAMACH-ANDRAN.** Concrete Admixtures Handbook. Noyes Publications, 1984